Europäisches Patentamt

European Patent Office

Office européen des brevets

(11) Veröffentlichungsnummer: **0 224 815 B1**

(12) **EUROPÄISCHE PATENTSCHRIFT**

(45) Veröffentlichungstag der Patentschrift: **17.04.91**

(51) Int. Cl.5: **B60G 17/08**, F16F 9/46

(21) Anmeldenummer: **86116155.2**

(22) Anmeldetag: **21.11.86**

(54) Regelbares Ventilsystem für einen Schwingungsdämpfer und Verfahren zur Steuerung bzw. Regelung desselben.

(30) Priorität: 25.11.85 DE 3541544
28.11.85 DE 3542097

(43) Veröffentlichungstag der Anmeldung:
10.06.87 Patentblatt 87/24

(45) Bekanntmachung des Hinweises auf die
Patenterteilung:
17.04.91 Patentblatt 91/16

(84) Benannte Vertragsstaaten:
AT BE CH DE ES FR GB GR IT LI LU NL SE

(56) Entgegenhaltungen:
EP-A- 0 122 575          DE-A- 2 911 768
DE-A- 3 312 899          DE-C- 3 346 352
FR-A- 2 552 515          GB-A- 2 164 120
US-A- 2 061 068          US-A- 4 491 207

(73) Patentinhaber: F & O Electronic Systems
GmbH
Kirchenstrasse 38
W-6901 Neckarsteinach(DE)

(72) Erfinder: Becker, Jürgen p.A. Firma Hauni-
Werke
Körber & Co. KG. Postfach 800460
W-2000 Hamburg 80-Bergedorf(DE)
Erfinder: Kreutze, Gerhard
Kirchenstrasse 38
W-6901 Neckarsteinach(DE)
Erfinder: Lüttig, Winfried
Langeacker 16
W-6901 Heiligkreuzsteinach(DE)
Erfinder: Obstfelder, Günther
Panoramastrasse 28
W-6840 Weinheim-Lützelsachsen(DE)

(74) Vertreter: Mierswa, Klaus, Dipl.-Ing.
Friedrichstrasse 171
W-6800 Mannheim 24(DE)

## Beschreibung

Die Erfindung betrifft ein regelbares Dämpfungsventilsystem mit veränderbarer Dämpfungscharakteristik für einen Schwingungsdämpfer nach dem Oberbegriff des Anspruchs 1.

Durch die DE-C-3 346 352 ist ein regelbares Ventil für die Kolbenstange eines Schwingungsdämpfers bekanntgeworden, die im Bereich des Kolbens eine Längsbohrung und oberhalb desselben die Längsbohrung durchsetzende Radialkanäle aufweist, die zusammen einen Durchgang zwischen den beiden Kammern des Zylinders bilden. Der Steuerschieber ist ein Hubschieber und als hohlzylindrische Hülse gestaltet, die die Kolbenstange umschließt und auf dieser im Bereich der Radialkanäle über deren Öffnungen hinweg auf und ab beweglich angeordnet ist, wobei die Hülse an ihrer Mantelwandung in Querschnittsebenen liegende, übereinander angeordnete Ringe aus ferromagnetischem Werkstoff aufweist, die untereinander magnetisch in Verbindung stehen. Der Elektromagnet innerhalb des Zylinders besteht aus einer Mehrzahl von selektiv ansteuerbaren Erregerspulen mit Schalenkernen, die in Längsrichtung der Kolbenstange übereinander angeordnet und zu dieser ortsfest sind und die Hülse torusförmig umgeben. Die Erregerspulen mit Schalenkernen bilden dabei den Stator, die Hülse den beweglichen Teil eines Linearmotors. Der Hub des einzelnen Schrittes des Steuerschiebers hängt von der Anzahl der Ringe desselben, der Anzahl der Polschuhe der Schalenkerne bzw. der Anzahl der Erregerspulen und dem Abstand der Pulschuhe voneinander ab. Bei fortlaufender nacheinander erfolgender Ansteuerung der Erregerspulen durch einen elektronischen Regel- bzw. Steuerschaltkreis geraten wechselseitig bestimmte Ringe der Hülse den Polschuhen benachbart gegenüber, so daß der Steuerschieber schrittweise mit dem wandernden Magnetfeld innerhalb der Erregerspulen auf der Kolbenstange bewegt wird und somit den Durchgang der Kolbenstange mehr oder weniger öffnet oder schließt.

Durch die EP-A-0 122 575 ist ein derartiges ähnliches regelbares Ventil für die Kolbenstange eines Schwingungsdämpfers bekanntgeworden, bei dem der in die Längsbohrung mündende Querdurchbruch oder Radialkanal oberhalb des Kolbens zur Bildung eines Durchgangs zwischen den beiden Kammern des Zylinders mittels einer aufgesteckten Hülse abgedeckt ist, die eine Mehrzahl von in verschiedenen Querschnittsebenen übereinander liegenden Bohrungen in Querreihen im Bereich des Radialkanals aufweist, die reihenweise nacheinander mittels eines Hubschiebers überfahren und dabei geschlossen oder geöffnet werden können, wobei die untere Kante des Hubschiebers in jeder Schrittstellung immer zwischen zwei übereinanderliegenden Querreihen von Bohrungen zu liegen kommt. Dadurch wird erreicht, daß durch das strömende Dämpfungsmedium keine Kräfte auf den Hubschieber übertragen werden.

Durch die DE-A-3 312 899 ist ein regelbares Ventil als Schrittschaltmotor für die Kolbenstange eines Schwingungsdämpfers bekanntgeworden, bei dem der Steuerschieber als Drehschieber ausgebildet ist. Dieser ist ebenfalls als hohlzylindrische Hülse gestaltet, die die Kolbenstange im Bereich der Radialkanäle umschließt und die in ihrer Mantelwandung entsprechend der Anzahl der Radialkanäle Öffnungen besitzt, die bei Drehung der Hülse in einer Querschnittsebene der Kolbenstange relativ zu derselben die Radialkanäle und somit den Durchgang der Kolbenstange mehr oder weniger freigeben, wobei die Elektromagnete innerhalb des Zylinders an der Kolbenstange ortsfest befestigt und koaxial in Abständen voneinander um dieselbe und den Steuerschieber herum angeordnet sind. Wandert das Magnetfeld von einem Elektromagnet zum anderen um die Kolbenstange um, so wird der Drehschieber entsprechend mitgenommen und gedreht.

Obwohl diese bekannten Ventile eine automatische Anpassung des Schwingungsdämpfers an die äußeren Gegebenheiten, beispielsweise die Straßenbeschaffenheit, erlauben, haftet ihnen gemeinsam der Nachteil an, daß die Schaltzeit von der Schließ- in die volle Durchlaßstellung entsprechend der Anzahl der Schaltschritte entsprechend groß ist, weil diese sämtlich binär in additiver Folge durchlaufen werden müssen. Das bedeutet, daß bei derartigen Schwingungsdämpfern immer nur additiv Kennlinien jeweils als ganzes Vielfaches voneinander innerhalb einem Kennlinienfeld möglich sind. Deshalb besitzen beide Ventile auch ein sich änderndes dynamisches Verhalten bezüglich der unterschiedlichen Schritte bzw. der Sprungweiten. Hinzu kommt, daß einer Vergrößerung der Schrittanzahl Grenzen gesetzt sind, weil dadurch die zu bewegende Masse des Schiebers zu sehr ansteigt und das System bezüglich eines Einzelschrittes als auch der Schaltzeit von der Schließ- in die volle Durchlaßstellung zu langsam wird. Durch die praktische Begrenzung der Schrittanzahl sind dadurch auch die Möglichkeiten der Schaffung einer Vielzahl von durchfahrbaren Kennlinien eines Kennlinienfeldes begrenzt. Des weiteren kommt hinzu, daß der softwaremäßig einzugebende Steuer- bzw. Regelalgorithmus zur Steuerung bzw. Regelung des Schiebers sehr kompliziert ist.

Durch die DE-A-2 911 768 ist ein regelbarer Stoßdämpfer bekanntgeworden, der aus einem mit einer Dämpfungsflüssigkeit gefüllten Zylinder und einem den Zylinder übergreifenden Topf besteht, der innen zentrisch und axial eine Kolbenstange aufweist, die in den Zylinder eintaucht und die an ihrem Ende eine gegen die Zylinderwand abgedichtete Scheibe trägt, die den Zylinderraum in zwei Kammerhälften aufteilt und die richtungsabhängige Hoch- und Niederdruckventile aufweist mit einem in einer axialen Bohrung der Kolbenstange beweglich angeordneten, in axialer Richtung federbelasteten Steuerschieber, der in Ruhe/Arbeitsstellung eine zusätzliche Durchgangsöffnung zwischen den beiden Kammerhälften schließt. Der Steuerschieber ist in axialer Richtung an einem Anker angeordnet, der in eine elektrische Spule eintaucht, die innerhalb der Längsbohrung im oberen Teil der Kolbenstange angeordnet ist und die eine elektrische Zuführleitung von außerhalb des Stoßdämpfers aufweist. Des weiteren weist der Zylinder an seinem oberen Ende mindestens einen Dauermagneten auf, wobei an der zylindrischen Innenwandung des Topfes mindestens eine Spule angeordnet ist, die ebenfalls eine Zuführleitung von außerhalb des Stoßdämpfers aufweist. Mit einer derartigen Anordnung ist es praktisch nicht möglich, die Durchgangsöffnung durch den Steuerschieber beliebig teilweise zu schließen, weil der Anker mitsamt dem Steuerschieber frei beweglich innerhalb der Spule angeordnet ist. Deshalb können einwandfrei nur die Endstellungen des Steuerschiebers geschaltet werden.

Der Erfindung liegt die Aufgabe zugrunde, ein regelbares Dämpfungsventilsystem für einen Schwingungsdämpfer der eingangs genannten Gattung derart zu verbessern, daß das Dämpfungsventilsystem extrem kurze Schaltzeiten bei geringstmöglicherbewegter Masse des Steuerschiebersystems aufweist, wobei eine praktisch beliebige Vielzahl von durchfahrbaren Kennlinien eines Kennlinienfeldes und eine Verknüpfung von unabhängigen Kennlinienfeldern miteinander bei gleichzeitiger Vereinfachung des Steuer- bzw. Regelalgorithmus zur Steuerung bzw. Regelung des Steuerschiebersystems gegeben sein soll; insbesondere soll auch die Schaffung atypischer Kennlinien als nicht ganzes Vielfaches voneinander innerhalb eines Kennlinienfeldes möglich sein.

Die Aufgabe wird erfindungsgemäß gelöst durch die Merkmale des Anspruchs 1. Weitere vorteilhafte Ausgestaltungen der Erfindung sind in den Unteransprüchen gekennzeichnet.

Die Erfindung besitzt gegenüber den bekannten regelbaren Ventilen eine Reihe von Vorteilen. Aufgrund des parallelen Schaltens von fluidmäßig parallel zueinander angeordneten Passagen zur Verbindung der beiden Kammern des Schwingungsdämpfers, gegebenenfalls auch zur Verbindung des Ausgleichsraumes bei einer Zwei-Zylinderausführung, mittels voneinander getrennter Steuerschiebersysteme besitzt das erfindungsgemäße Dämpfungsventilsystem extrem kurze Schaltzeiten, wobei der einzelne Schieber (Läufer) eines Steuerschiebersystems geringstmögliche bewegte Masse aufweist. Bei der Ausführung mit jeweils nur einer Verschließ- und nur einer Öffnungsstellung der einzelnen Schieber ist in vorteilhafter Weise nur eine einzige, jeweils konstante Schaltzeit von der Verschließstellung in die maximale Öffnungsstellung vorhanden, was entscheidend dazu beiträgt, die Schaltzeit zu verkürzen. Die maximale Schaltzeit erhöht sich bei zum Beispiel tristabiler Stellung der einzelnen Schieber nur unwesentlich.

Entsprechend der Anzahl der verwendeten einzelnen Steuerschiebersysteme auf der Kolbenstange können des weiteren mit dem Gegenstand der Erfindung eine Vielzahl von Kennlinien je Kennlinienfeld erzeugt und durchfahren werden, wobei die Anzahl der Kennlinienfelder $2^n-1$ beträgt; dabei bedeutet n die Anzahl der Schiebersysteme. Insbesondere lassen sich dadurch auch atypische Kennlinienfelder erzeugen entsprechend der gewünschten Dämpfung bei beliebiger Anwendung und beliebigem Einsatz eines derartigen Schwingungsdämpfers. Das bedeutet, daß die Kennlinien eines Kennlinienfeldes nicht mehr additiv ein ganzes Vielfaches voneinander zu sein brauchen, wie es zwingend beim Stand der Technikder Fall ist, sondern die Kennlinien eines Kennlinienfeldes können atypisch eine beliebige Teilung nicht als ganzes Vielfaches voneinander, sondern kleiner, aufweisen, wodurch das dadurch erzeugte Kennlinienfeld kleiner als das binär additive größtmögliche Kennlinienfeld ist. Diese beliebige Gestaltung eines Kennlinienfeldes ist für die praktische Anwendung äußerst wichtig. Das Dämpfungsventilsystem erlaubt deshalb ein direktes und reproduzierbares Zugriffsverfahren zu praktisch jeder beliebigen Dämpfung einer beliebigen Kennlinie.

Ein weiterer Vorteil des erfindungsgemäßen Dämpfungsventilsystems besteht darin, daß sowohl monostabile, als auch bistabile oder mehrfachstabile Steuerschiebersysteme aufgebaut werden können; insbesondere können verschiedene Systeme gemischt innerhalb eines Schwingungsdämpfers zur Anwendung gelangen. Damit soll ausgedrückt sein, daß das jeweilige Steuerschiebersystem einen oder zwei oder drei stabile statische Arbeitspunkte besitzen kann. Von besonderer Bedeutung ist dabei der Aufbau eines Schwingungsdämpfers unter gleichzeitiger Verwendung von monostabilen und bistabilen Systemen.

Zum Aufbau eines bistabilen Steuerschiebersystems besteht in der einfachsten Ausführung der einzelne Schieber - als Hub- oder als Drehschieber - aus einem Permanentmagneten, der bei Ansteuerung durch die zugehörige Erregerspule zwei stabile Lagen einzunehmen imstande ist. Die gleichzeitige Verwendung von monostabilen und bi- oder mehrfachstabilen Schiebersystemen, vorzugsweise jedoch von monostabilen und bistabilen, ermöglicht die Konstruktion eines Schwingungsdämpfers, der bei Ausfall des elektronischen Steuer- und Regelsytems wie ein herkömmlicher Schwingungsdämpfer reagieren kann, also weder völlig weich noch völlig hart wird, was für die Fahrsicherheit eines mit derartigen Schwingungsdämpfern bestückten Kraftfahrzeuges von entscheidender Wichtigkeit ist.

Ein weiterer Vorteil des erfindungsgemäßen Dämpfungsventilsystems besteht darin, daß dieses bei zwei Schaltzuständen eine absolut konstante Dynamik besitzt. Ein derartiges Dämpfungsventilsystem erlaubt somit, zu den auftretenden Beschleunigungskräften praktisch synchron die Dämpfung einzustellen und ansprechen zu lassen, bezogen auf die Regelzeit des Systems, die extrem klein ist. Ein weiterer Vorteil des erfindungsgemäßen Dämpfungsventilsystems besteht darin, daß der Steuer- und Regelalgorithmus zur Steuerung bzw. Regelung der Schieber softwaremäßig sehr vereinfacht ist. Des weiteren kann innerhalb des einzelnen bistabilen oder mehrfachstabilen Steuerschiebersystems - sowohl bei Verwendung eines Drehschiebers, als auch eines Hubschiebers - entweder der Stator oder der Läufer des Schrittschaltmotors mit einem oder mehreren Permanentmagneten ausgerüstet sein. Ebenso ist die Ausführung denkbar, daß der Schieber als Elektromagnet ausgebildet ist. Ebenso ist ein einfacher mechanischer Aufbau des erfindungsgemäßen Dämpfungsventilsystems gegenüber den bekannten Ventilen gegeben.

Bei dem erfindungsgemäßen Dämpfungsventilsystem ist es möglich, sämtliche Steuerschiebersysteme parallel zu schalten und dadurch extrem kleine Schaltzeiten zu erzielen. Jedoch führt das Dämpfungsventilsystem darüber hinaus, weil es ermöglicht, derartige Steuerschiebersysteme nicht nur für den Durchgang innerhalb der Kolbenstange eines Schwingungsdämpfers, sondern auch innerhalb eines weiteren Durchgangs desselben einzusetzen, beispielsweise innerhalb des Durchgangs vom inneren Zylinder eines Schwingungsdämpfers zu einem geschlossenen Auffangraum, der beispielsweise als äußerer Zylinder des Schwingungsdämpfers (Zweirohr-Schwingungsdämpfer) oder als schwimmender Zylinder ausgeführt ist.

Deshalb kann in vorteilhafter Weise im Boden des inneren Zylinders ein derartiges Steuerschiebersystem als Bodenventil angeordnet sein, um diesen Durchgang unabhängig von der Ansteuerung der Steuerschiebersysteme auf der Kolbenstange von der Verschließ- in die Öffnungsstellung zu schalten. Dadurch ist in vorteilhafter Weise die Möglichkeit einer Regelung bzw. Steuerung der Dämpfung sowohl in der Druckstufe, als auch in der Zugstufe gegeben. Dadurch wiederum ist eine vorteilhafte Verknüpfungsmöglichkeit von verschiedenen, normalerweise voneinander unabhängigen Kennlinienfeldern gegeben. Dadurch kann praktisch jede beliebige Dämpfungsgröße und Kombination quasi zeitlich unabhängig vom Gradienten der Veränderung erzielt und eingestellt werden. In vorteilhafter Weise ist der Schieber des Steuerschiebersystems, das bei Verwendung des Schwingungsdämpfers für ein Fahrzeug sämtliche Bewegungen der Achse mitmacht, als Drehschieber ausgeführt, so daß die auftretenden vertikalen Beschleunigungskräfte keine ungewollte Fliehkraft-Verstellung des Schiebers bewirken können.

Beispiele der Erfindung sind in den Zeichnungen dargestellt und anschließend beschrieben. Dabei zeigen:

Figur 1     eine schematische Darstellung des unteren Endteils einer Kolbenstange mit fünf fluidmäßig parallelen Passagen und fünf zugeordneten parallelen Schiebersystemen,

Figur 2     im Längsschnitt der Kolbenstange ein einzelnes Steuerschiebersystem, welches monostabil ausgeführt ist und wobei der Schieber ein Hubschieber ist,

Figur 3     ebenfalls im Längsschnitt der Kolbenstange ein weiteres Steuerschiebersystem mit bistabilem Hubschieber,

Figur 4     in verschiedenen Querschnittsebenen der Kolbenstange eine Draufsicht auf ein weiteres Steuerschiebersystem mit bistabilem Drehschieber,

Figur 5     einen Längsschnitt längs der Linie A-A in Figur 4,

Figur 6     eine Ansicht von vorn des Elektromagneten in Figur 4,

Figur 7     im Querschnitt der Kolbenstange eine Draufsicht auf ein weiteres Steuerschiebersystem mit monostabilem Drehschieber,

Figur 8     einen Längsschnitt längs der Linie B-B in Figur 7 und

Figur 9     eine schematische Darstellung im Schnitt des unteren Endteils eines Schwingungsdämpfers, wobei auch innerhalb des Durchgangs zum Auffangraum ein Steuerschiebersystem angeordnet ist.

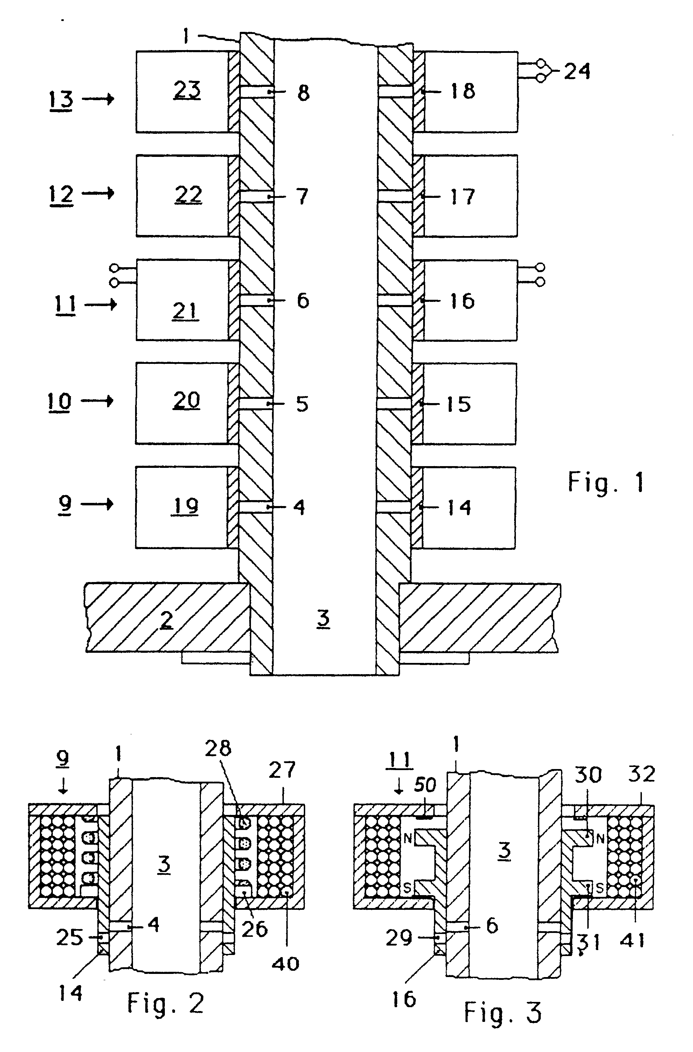

In Figur 1 ist schematisch eine Darstellung des Gegenstandes der Erfindung wiedergegeben, bestehend aus einer Kolbenstange 1, auf deren unteren Ende ein Kolben 2 in bekannter Weise montiert ist. Die Kolbenstange 1 weist im Bereich des Kolbens 2 eine Längsbohrung 3 auf, die von der unteren Stirnfläche der Kolbenstange 1 sich nach oben über den Kolben 2 hinweg erstreckt. In vorzugsweiser äquidistanten Abständen sind in Querschnittsebenen der Kolbenstange 1 Querdurchbrüche 4,5,6,7,8 angeordnet, die alle in die Bohrung 3 der Kolbenstange 1 münden. Somit bilden jeweils ein oder mehrere Querdurchbrüche ein- und derselben Querschnittsebene, in der dieselbe angeordnet sind, zusammen mit der Längsbohrung 3 eine Passage 3-4, 3-5,3-6,3-7,3-8 zur Verbindung der beiden Kammern des Schwingungsdämpfers, wobei sämtliche Querdurchbrüche übereinander und fluidmäßig parallel angeordnet sind. Im Bereich eines jeden Querdurchbruches ist ein Steuerschiebersystem 9,10,11,12,13 angeordnet, wobei in dem in Figur 1 gezeigten Beispiel fünf fluidmäßig parallele Querdurchbrüche mit fünf zugehörigen Schiebersystemen 9-13 vorhanden sind. Die Durchlaßquerschnitte der Passagen können unterschiedlich gemäß dem gewünschten Kennlinienfeld sein. Die übrigen Teile des Schwingungsdämpfers sind bekannt und der Einfachheit halber weggelassen.

Diese Steuerschiebersysteme sind mechanisch voneinander unabhängig und beinhalten in ihrem wesentlichen Aufbau einen oder mehrere Elektromagnete 19,20,21,22,23 und je einen Schieber 14,15,16,17,18. Jeder Schieber ist im Bereich des von ihm abgedeckten Querdurchbruchs der Kolbenstange 1 beweglich angeordnet und weist eine oder mehrere mit dem Querdurchbruch koinzidierende, die Mantelwandung des Schiebers durchsetzende Öffnungen bezüglich der Querdurchbrüche oder Radialkanäle innerhalb der betreffenden Querschnittsebene oder Radialkanäle innerhalb der betreffenden Querschnittsebene der Kolbenstange auf. Der einzelne Schieber 14-18 des Steuerschiebersystems 9-13 kann als Hubschieber oder als Drehschieber ähnlich dem eingangs genannten Stand der Technik ausgestaltet sein; ebenso ist die Ausführung möglich, daß der einzelne Schieber den Elektromagneten darstellt, indem die Hülse eine Drahtwickelung mit Anschlüssen aufweist und der zugehörige Stator dieses Schrittschaltmotor-Schiebesystems ein geeignet geformter, außen liegender Schalenkern, auch mit oder ohne Permanentmagnet, ist.

Prinzipiell lassen sich erfindungsgemäß verschiedene Steuerschiebersysteme aufbauen, in denen der als Hülse ausgebildete Schieber monostabil oder bistabil oder auch mehrfachstabil ausgestaltet sein kann. Aus derartigen Schiebersystemen lassen sich vorteilhaft Kombinationen unter gleichzeitiger Verwendung von monostabilen oder bistabilen Systemen auf einer Kolbenstange aufbauen, um beliebige Grenzbedingungen und Kennwerte des Schwingungsdämpfers festzulegen.

Figur 2 zeigt beispielsweise ein einzelnes Steuerschiebersystem, bei dem der Schieber des durch das Schiebersystem verkörperten Schrittschaltmotors monostabil ist. Beispielsweise besteht das Steuerschiebersystem 9 aus einem Schalenkern 27, der vorzugsweise aus magnetisch weichem Material, beispielsweise Weicheisen, besteht und der torusförmig die Kolbenstange 1 umgibt. Der Schalenkern besitzt zwei torusförmig gestaltete Polschuhe, die zwischen sich einen Aufnahmeraum für eine oder mehrere Erregerspulen 40 begrenzen und die Kolbenstange 1 ringförmig unter Belassung eines Abstandes umgeben, in welchem ein Hubschieber 14 auf der Kolbenstange 1 im Bereich des zugeordneten Querdurchbruchs 4 nach oben und unten beweglich angeordnet ist. Der Hubschieber 14 weist eine oder mehrere die Mantelwandung desselben durchsetzende Bohrungen 25 auf, die mit den Radialkanälen 4 der Passage 3-4 in Öffnungsstellung koinzidieren und in Verschließstellung zu den Radialkanälen 4 versetzt die Passage 3-4 verschließen. Auf den Hubschieber 14 ist innerhalb des torusförmigen Aufnahmeraums ein Ring aus para- oder diamagnetischem Werkstoff aufgezogen, der beispielsweise aus Messing besteht. Innerhalb des torusförmigen Aufnahmeraums des Schalenkerns 27 ist eine den Hubschieber 14 spiralig umgebende Druckfeder 28 angeordnet, die sich mit ihrem unteren Ende auf dem Ring 26 und mit ihrem oberen Ende am oberen Polschuh des Schalenkerns 27 abstützt.

Es ist offensichtlich, daß diese Ausführung dem Hubschieber 14 eine monostabile Ruhestellung verleiht; der Hubschieber wird von der Druckfeder 28 über den Ring 26 in Ruhestellung nach unten gedrückt, so daß die Passage 3-4 verschlossen ist. Bei Aktivierung des Elektromagneten 9 bzw. der Erregerspule 40 oder -spulen, wird der Hubschieber 14 gegen die Kraft der Druckfeder 28 nach oben bewegt, so daß die Bohrung 25 innerhalb des Hubschiebers 14 mit der Passage 3-4 koinziert und diese für den Durchfluß des Fluids freigibt.

In Figur 3 ist ein weiteres Steuerschiebersystem gezeigt, welches beispielsweise das Steuerschiebersystem 11 der Figur 1 ist. Der Schieber ist wiederum als Hubschieber 16 ausgestaltet, jedoch ist dieser im Unterschied zu Figur 2 als Permanentmagnet ausgeführt, so daß der Hubschieber eine bistabile Stellung einzunehmen imstande ist. Dazu besitzt der Hubschieber 16 zwei in Abstand voneinander übereinander angeordnete, scheibenförmige oder teilscheibenförmige, beispielsweise sektorförmige, Permanentmagnete 30, 31, die magnetisch miteinander verbunden sind. Beispielsweise kann der gesamte Hubschieber 16 ein derartiger Permanentmagnet sein. In dem in Figur 3 gezeigten Beispiel liegt der Nordpol oben und der Südpol unten, die umlaufend gestaltet sein können. In der einen stabilen Stellung ist beispielsweise der Südpol einem Polschuh des Schalenkerns 32, in der anderen stabilen Stellung hingegen der Nordpol dem anderen Polschuh des Schalenkerns 32 unmittelbar benachbart , die vorzugsweise an den Auflageflächen der Pole dünne, unmagnetische Abstandshalter 50 tragen. Innerhalb des Schalenkerns 32 sind eine oder mehrere Erregerspulen 41 angeordnet. Je nach Polung der Erregerspule 41 oder -spulen wird der Hubschieber 16 gemäß der Anordnung des oder der Permanentmagnete bewegt und nach Inaktivierung des Elektromagneten 20 in seiner Stellung aufgrund der Permanentmagnete 30,31 selbsttätig gehalten.

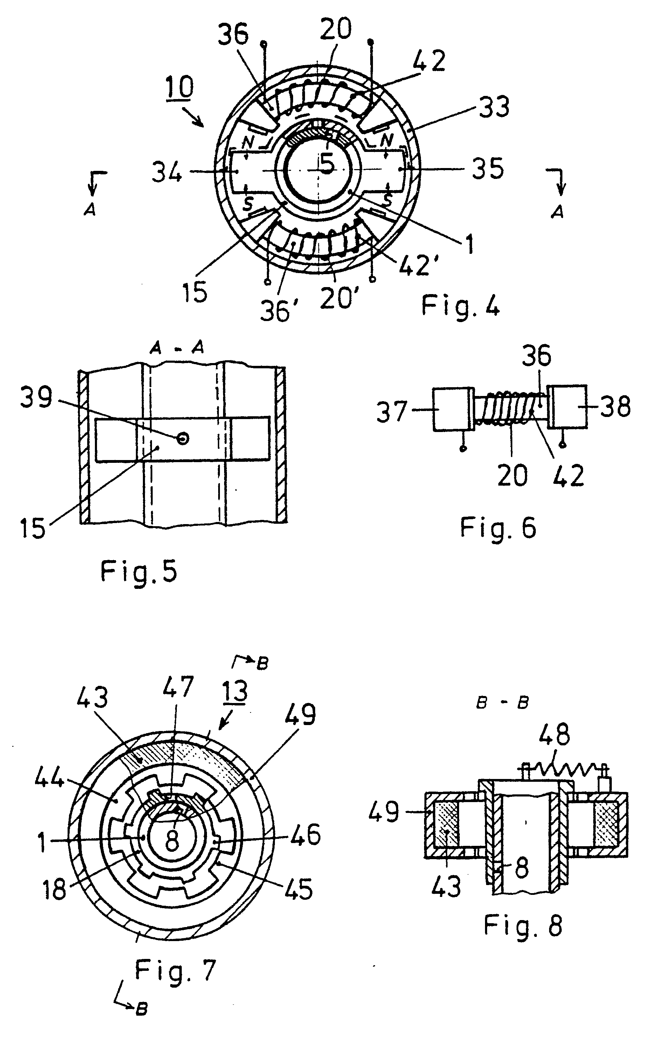

Das einzelne Steuerschiebersystem kann gleichermaßen mittels einem Drehschieber aufgebaut sein. Beispielsweise zeigen die Figuren 4-6 ein derartiges Steuerschiebersystem mit zwei stabilen Stellungen des Drehschiebers, wobei dieser in der momentanen Bewegung mittig von einer Endstellung in die andere gezeichnet ist.

Mit der Bezugsziffer 33 in Figur 4 ist der Querschnitt eines Magnetgehäuses benannt, welches zum Beispiel auch das eine Zylinderrohr des Schwingungsdämpfers sein kann, wobei das Steuerschiebersystem 10 der Figur 1 teilweise im Querschnitt und in der Draufsicht abgebildet ist. An der Innenwandung des Magnetgehäuses 33 sind in der entsprechenden Querschnittsebene der Passage 3-5 der Kolbenstange 1 zwei gekrümmte Elektromagnete 20,20' angeordnet, die je aus einem länglichen stabförmigen und gekrümmten Spulenkern 36,36' bestehen, auf die je eine oder mehrere Erregerspulen 42,42' gewickelt sein können. Prinzipiell können für jede Stellung des Schiebers eine entsprechende Anzahl von Elektromagneten vorhanden sein, beispielsweise zwei bei bistabiler Stellung bezüglich der Passage. Doch ist die bistabile Stellung gleichermaßen auch mit nur einem Elektromagneten durchführbar.

Auf der Kolbenstange 1 ist im Bereich der Passage 3-5 ein Schieber angeordnet, der als Drehschieber 15 ausgestaltet ist und der auf der Kolbenstange 1 um einen bestimmten Winkel relativ zu derselben in der betreffenden Querschnittsebene hin- und her drehbar ist. Der Drehschieber 15 weist eine oder mehrere seine Mantelwandung radial durchsetzende Bohrungen 39 auf, die in der Öffnungsstellung mit den entsprechenden Querdurchbrüchen 5 der entsprechenden Querschnittsebene koinzidieren und somit die Passage 3-5 freigeben.

Der Drehschieber 15 weist in Verlängerung mindestens eines Durchmessers die Pole je eines Dauermagneten 34,35 auf, wobei sich vorzugsweise die Dauermagneten derart gegenüberstehen, daß die Pole derselben tangential gerichtet sind, was aus Figur 4 aufgrund der Polbenennung zu ersehen ist. Beide Permanentmagnete 34,35 können magnetisch miteinander in Verbindung stehen, beispielsweise kann auf den Drehschieber eine entsprechend geformte Scheibe, die permanentmagnetisch ist, aufgezogen sein. Die Spulenkerne 36,36' weisen an ihren Enden Anlageflächen 37,38 auf, an denen bei entsprechender Stellung jeweils einer der Permanentmagnete 34,35 anliegt. Bei entsprechender Erregung eines oder beider Elektromagnete 20,20' wird der Drehschieber 15 entsprechend der Polung der Permanentmagnete 34,35 gedreht, so daß sich gleichnamige Pole abstoßen. Bei Inaktivierung des oder der Elektromagnete 20,20' hält dann der Drehschieber 15 seine einmal eingenommene Stellung aufgrund der Permanentmagnete 34,35 selbsttätig bei. Liegen beispielsweise der Nordpol des Permanentmagneten 35 und der Südpol des Permanentmagneten 34 an den Auflageflächen 37,38 der Enden der Spulenkerne 36 und 36' an, so ist die Passage 3-5 freigegeben, im umgekehrten Fall geschlossen. Des weiteren ist es möglich, auch Permanentmagnet-Paare auf mehreren Durchmessern des Drehschiebers entsprechend vorzusehen, um so z.B. ein mehrfachstabiles System zu schaffen.

Die Figuren 7 und 8 zeigen ein weiteres Ausführungsbeispiel eines Steuerschiebersystems, beispielsweise das Steuerschiebersystem 13, wobei hier der Schieber als monostabiler Drehschieber 18 ähnlich dem Schieber 14 der Figur 2 ausgebildet ist. Ein torusförmiges Magnetgehäuse 49, welches auch der Zylinder des Schwingungsdämpfers sein kann, bildet zusammen mit einem innerhalb des Gehäuses 49 liegenden, magnetisierbaren Ring 44 einen ringförmigen Käfig, in welchem umlaufend eine oder mehrere Erregerspulen 43 angeordnet sein können. Der Ring 44 weist längs seiner inneren Peripherie radial nach innen gerichtete Nocken auf, die die Polschuhe des Elektromagneten 23 bilden. Auf der Kolbenstange 1 ist im Bereich der zugehörigen Querschnittsebene mit den Radialkanälen 8 und der Passage 3-8 ein Schieber 18 angeordnet, der als Drehschieber gestaltet ist. Dieser weist in seinem oberen Bereich radial nach außen gerichtete, magnetisierbare Nocken 46 auf, die beispielsweise auf einer magnetisierbaren Scheibe längs des Scheibenumfangs angeordnet sein können, wobei diese Nocken 46 vorzugsweise eine geringere Breite als die Nocken 45 des Ringes 44 haben und diesen unter Belassung eines Ringspaltes gegenüberstehen. Der Drehschieber 18 weist des weiteren mindestens eine seine Mantelwandung durchsetzende Bohrung 47 auf, die in Öffnungsstellung bei beispielsweise aktiviertem Elektromagnet 23 zur Passage 3-8 versetzt ist und diese verschließt. Zum Rückstellen des Drehschiebers 18 bei inaktivem Elektromagnet 23 in eine vorgegebene Ruhestellung greift an demselben eine Rückstellfeder 48 an.

Innerhalb des Schwingungsdämpfers ist zur elektronischen Steuerung bzw. Regelung ein (nicht gezeichneter) elektronischer Steuer- bzw. Regelschaltkreis in bekannter Weise angeordnet, der das erfindungsgemäße Dämpfungsventilsystem softwaremäßig zur Verstellung desselben ansteuert.

Erfindungsgemäß ist es möglich, den gesamten wirkungsmäßig vorhandenen Durchlaßquerschnitt ein oder mehrerer Durchgänge eines derartigen Dämpfungsventilsystems nicht mehr in mehreren, hintereinander geschalteten, additiven Schritten zu durchlaufen, sondern den gesamten Durchlaßquerschnitt in einem einzigen Schritt von der Verschließstellung in die Öffnungsstellung des Dämpfungsventilsystems freizugeben. Das ist deshalb möglich, weil eine beliebige Anzahl der Steuerschiebersysteme erfindungsgemäß parallel angesteuert wird und dadurch die entsprechenden, fluidmäßig parallelen Passagen gleichzeitig verschlossen und/oder geöffnet werden.

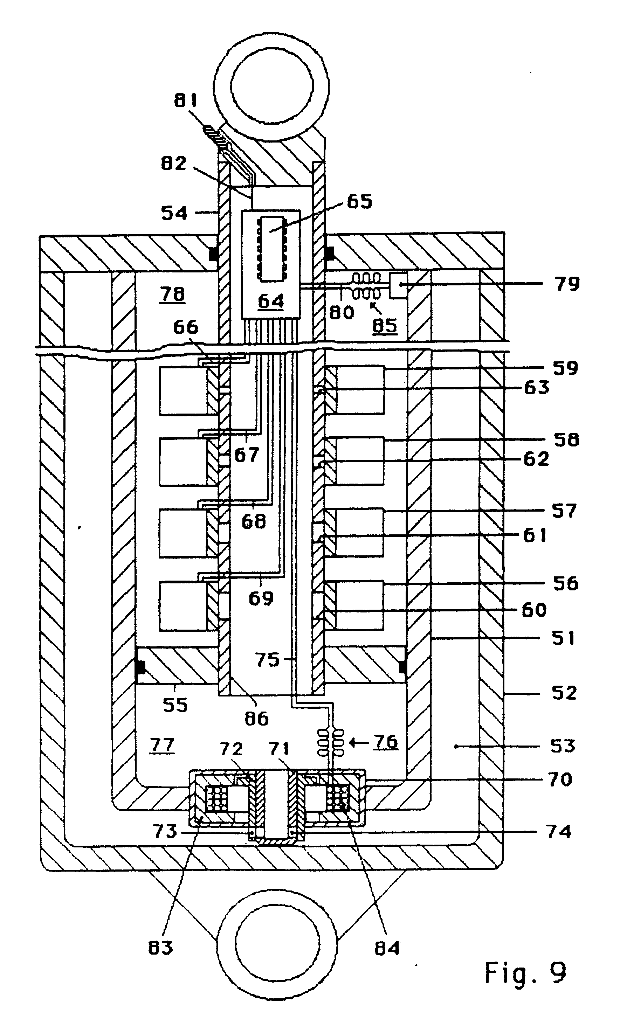

Figur 9 zeigt ein weiteres schematisches Beispiel eines vollständigen Schwingungsdämpfers bestehend aus zwei ineinander angeordneten Zylindern, die zwischen sich einen Ausgleichsraum für das Dämpfungsmedium einschließen, wobei dieser Schwingungsdämpfer die Möglichkeit einer Regelung bzw. Steuerung der Dämpfung sowohl in der Druckstufe als auch in der Zugstufe aufweist.

Ein Zylinder 51 ist innerhalb eines zweiten Zylinders 52 angeordnet, wobei im Boden des ersten oder inneren Zylinders 51 ein Durchgang angeordnet ist, so daß zwischen beiden Zylindern ein Auffang- oder Ausgleichsraum 53 für das Dämpfungsmedium gebildet ist. Innerhalb des inneren Zylinders 51 befindet sich eine Kolbenstange 54 mit Kolben 55, der den Innenraum des inneren Zylinders 51 in zwei Kammern 77 und 78 aufteilt; der Kolben 55 mit Kolbenstange 54 kann gemäß der Ausführung in Figur 1 gestaltet sein, wobei auf der Kolbenstange 54 eine Mehrzahl von Schiebersystemen 56,57,58,59 angeordnet sein können, die jeweils gemäß einem der Steuerschiebersysteme der Figuren 2-8 ausgestaltet sind.

Der Kolben des Kolben-Zylinder-Systems des inneren Zylinders kann auch in bekannter Weise Ventile, z.B. Hoch- und Niederdruckventile, aufweisen, so daß der Durchgang innerhalb der Kolbenstange zusammen mit den Durchgängen im Bereich der Steuerschiebersysteme eine Mehrzahl zusätzlicher paralleler und steuerbarer Bypässe darstellen.

Die Kolbenstange 54 weist in Abständen übereinanderliegende Durchgänge 60,61,62,63 auf, die beispielsweise als Querbohrungen zur Längsbohrung 86 der Kolbenstange 54 verlaufen. Diese Querbohrungen 60-63 können verschieden große, wirksame Querschnitte aufweisen, was der Figur 9 zu entnehmen ist. Beispielsweise verhalten sich die Durchmesser der Bohrungen 63-60 wie 0,25 : 50 : 1 : 1,50. Dadurch ist es möglich, die zu- oder abschaltbaren Querschnitte sehr schnell zu reduzieren bzw. zu vergrößern, wodurch die "Härte" des Schwingungsdämpfers praktisch beliebig gesteuert werden kann, indem die Durchlaßquerschnitte zwischen den beiden Kammern 77-78 entsprechend verringert oder vergrößert werden. Diese Verringerung oder Vergrößerung kann nun nichtlinear erfolgen, es kann beispielsweise beim ersten Schritt ein großer Durchlaßquerschnitt geändert werden, bei den nachfolgenden Schritten nur ein geringerer oder umgekehrt. Dadurch kann sehr schnell eine erhebliche Änderung der Dämpfungscharakteristik erreicht werden, wodurch eine sehr schnelle Reduzierung oder Erhöhung der "Härte" des Schwingungsdämpfers gegeben ist.

Innerhalb der Kolbenstange 54 kann sich ein elektronischer Mikrorechner 64 befinden, der den gesamten elektrischen Regel- bzw. Steueralgorhythmus enthält und der neben den notwendigen elektrischen Schaltkreisen beispielsweise einen Mikrocomputer 65 aufweist. Von diesem Mikrorechner 64 führen jeweils Leitungen 66,67,68,69 zu den einzelnen Schiebersystemen 56-59 zum Ansteuern der Elektromagnete derselben.

Innerhalb des Bodens des inneren Zylinders 51 ist ein weiteres Steuerschiebersystem 70 eingesetzt, das zentrisch ein hohlzylindrisches, nur am oberen Ende offenes Rohrstück 71 aufweist, das am unteren Ende seitliche Öffnungen 74 besitzt, so daß der Durchgang von der unteren Kammer 77 des inneren Zylinders 51 zum Auffangraum 53 über das Steuerschiebersystem 70 geführt ist. Das Steuerschiebersystem 70 kann gemäß einem der Steuerschiebersysteme der Figuren 2-8 mit einem Elektromagneten ausgeführt sein, vorzugsweise ist der Schieber ein Drehschieber 72, damit dieser durch vertikal wirkende Beschleunigungskräfte nicht verstellt werden kann und weist eine Spule 84 und einen Magneten 83 auf.

Das Steuerschiebersystem 70 wird vom Mikrorechner 64 über eine Steuerleitung 75 angesteuert, wobei mit der Bezugsziffer 76 symbolisch ein flexibler Teil der Steuerleitung 75 bezeichnet ist, um die Längenunterschiede beim Betrieb auszugleichen. Der Drehschieber 72 ist relativ zum Rohrstück 71 drehbar und weist in seiner Mantelwandung Bohrungen 33 auf, die in Durchlaßstellung des Steuerschiebersystems 70 mit den Öffnungen 74 des Rohrstücks 71 koinzidieren, ansonsten den Durchgang durch das Steuerschiebersystem 70 verschließen. Auf diese Weise lassen sich durch die zusätzliche Steuerung des Steuerschiebersystems 70 eine Vielzahl von unterschiedlichen Kennlinien und unterschiedliche Kennlinienfelder erzeugen, insbesondere auch atypische Kennlinien. Daneben ist dadurch die Einstellung einer Dämpfungscharakteristik des Schwingungsdämpfers im Zugbetrieb (Auseinanderbewegen von Zylinder und Kolbenstange) unterschiedlich von derjenigen bei Druckbetrieb möglich.

Des weiteren kann innerhalb des inneren Zylinders 51 ein Beschleunigungsgeber 70 angeordnet sein, der über eine Leitung 80 mit dem Mikrorechner 64 verbunden ist, um auf diese Weise laufend den Momentanwert der Beschleunigung in den Regel- bzw. Steuerkreis für die Steuerschiebersysteme einzugeben. Mit der Bezugsziffer 85 ist ebenfalls symbolisch ein flexibler Teil der Leitung 80 gekennzeichnet, um die auch hier auftretenden Längenunterschiede zwischen Kolbenstange und Zylinder auszugleichen.

Der Mikrorechner 64 kann über eine Versorgungsleitung 82 von außerhalb des Schwingungsdämpfers mit elektrischer Energie versorgt werden, wobei diese Leitung 82 in einen nach außen ragenden Stiftanschluß 81 mündet, über den die Versorgungsspannung angelegt werden kann.

In sämtlichen Ausführungsbeispielen können grundsätzlich die Steuerschiebersysteme mit rotorischem Schrittantrieb durch solche mit translatorischem Schrittantrieb ersetzt werden und umgekehrt, wie diese Schrittantriebe grundsätzlich in der EP-A-0 122 575 dargestellt sind.

**Ansprüche**

1. Regelbares Dämpfungsventilsystem mit veränderbarer Dämpfungscharakteristik für einen Schwingungsdämpfer, insbesondere für Kraftfahrzeuge, der mindestens einen mit einem Dämpfungsmedium gefüllten Zylinder (51) und eine Kolbenstange (1,54) aufweist, die abgedichtet in den Zylinder eintaucht und die an ihrem zylinderseitigen Ende einen gegen die Zylinderwand abgedichteten Kolben (2,55) trägt, der den Zylinderraum in zwei Kammern (53,77,78) aufteilt, wobei die gegenüber dem Zylinder relativ beweglichen Kolbenteile mit einem zwischen den Kammern angeordneten Durchbruch versehen sind, dessen Querschnitt durch ein elektrisch gesteuertes Steuerschiebersystem freigebbar oder verschließbar ist, dadurch gekennzeichnet, daß zu dem vorhandenen Durchbruch mit elektrisch steuerbarem Querschnitt zwischen den Kammern (53,77,78) mindestens ein weiterer, parallel angeordneter Durchbruch (4,5,6,7,8,60,61,62,63,73,74) vorgesehen ist, der unabhängig vom ersten Steuerschiebersystem durch ein weiteres elektrisch gesteuertes Steuerschiebersystem (9,10,11,12,13,56,57,58,59,70) freigebbar oder verschließbar ist, wobei sämtliche Steuerschiebersysteme parallel unabhängig voneinander zu schalten imstande sind.

2. Regelbares Dämpfungsventilsystem nach Anspruch 1, dadurch gekennzeichnet, daß jeder Durchbruch (4,5,6,7,8;60,61,62,63) aus die Kolbenstange durchsetzenden Querdurchbrüchen (4,5,6,7,8,60,61,62,63) besteht, die in übereinander angeordneten Querschnittsebenen liegen und die gemeinsam in eine durch die Kolbenstange von ihrem stirnseitigen Ende ausgehende Längsbohrung (3,86) oberhalb des Kolbens einmünden, wobei jeder Querdurchbruch (4,5,6,7,8;60, 61,62,63) mittels jeweils eines elektrisch gesteuerten Steuerschiebersystems (9, 10,11,12,13; 56,57,58,59) freigebbar oder verschließbar ist und sämtliche Steuerschiebersysteme parallel unabhängig voneinander zu schalten imstande sind.

3. Regelbares Dämpfungsventilsystem nach Anspruch 2, dadurch gekennzeichnet, daß die wirksamen Querschnitte der Passagen (60,61,62,63) unterschiedlich groß sind.

4. Regelbares Dämpfungsventilsystem nach Anspruch 1 oder 2, dadurch gekennzeichnet, daß das Steuerschiebersystem (9,10,11,12,13,56,57,58,59,70) aus einem Schieber (14,15,16,17,18;72) und Elektromagneten (19,20,21,22,23;83-84) zum Bewegen der Schieber (14,15,16,17,18;72) besteht.

5. Regelbares Dämpfungsventilsystem nach Anspruch 1 oder 4, dadurch gekennzeichnet, daß die Schieber (14,15,16,17,18;72) der Steuerschiebersysteme (9,10,11,12,13, 56,57,58,59,70) im wesentlichen gleichzeitig ansteuerbar sind.

6. Regelbares Dämpfungsventilsystem nach Anspruch 1 oder 2, dadurch gekennzeichnet, daß die einzelnen Schieber als Drehschieber oder als Hubschieber jeweils mit den Stellungen "Offen" und "Zu" ausgebildet sind.

7. Regelbares Dämpfungsventilsystem nach Anspruch 6, dadurch gekennzeichnet, daß mindestens einer der Schieber als Permanentmagnet oder Permanentmagnete ausgebildet ist, wobei der entsprechende Schieber eine bistabile oder tristabile Stellung bezüglich des oder der Magnete einzunehmen imstande ist.

8. Regelbares Dämpfungsventilsystem nach Anspruch 1 oder 3, dadurch gekennzeichnet, daß mindestens eines der Steuerschiebersysteme zwischen der Verschließ- und der vollen Durchgangsstellung mindestens eine Zwischenstellung aufweist, die einen verminderten Durchlaßquerschnitt besitzt.

9. Regelbares Dämpfungsventilsystem nach Anspruch 1 oder 2 oder 6,
gekennzeichnet durch folgende Merkmale:
a) der Durchgang innerhalb der Kolbenstange (1) ist in eine Mehrzahl von fluidmäßig parallele Passagen (3-4,3-5,3-6,3-7,3-8) unterteilt, wobei jede Passage aus in die Längsbohrung (3) mündenden Querdurchbrüchen (4,5,6,7,8) besteht, die je Passage in verschiedenen, übereinander angeordneten Querschnittsebenen der Kolbenstange liegen,
b) jedes Steuerschiebersystem (9,10,11,12,13) besteht aus einer Mehrzahl von voneinander getrennten Hülsen (14,15,16,17,18), die übereinander, aber unabhängig voneinander auf der Kolbenstange (1) im Bereich der Querdurchbrüche (4,5,6,7,8) je einer Passage (3-4,3-5,3-6,3-7,3-8) beweglich angeordnet sind und denen je Hülse mindestens ein Elektromagnet (19,20,21,22,23) zugeordnet ist, wobei jeweils eine Hülse den Querdurchbrüchen einer Querschnittsebene bzw. Passage zugeordnet ist
c) jede Hülse besitzt eine Verschließ- und mindestens eine Durchgangsstellung bezüglich der zugeordneten Querdurchbrüche (4,5,6,7,8) zum Verschließen und Öffnen der Passage (3-4,3-5,3-6,3-7,3-8),
d) eine beliebige Anzahl der Steuerschiebersysteme (9,10,11,12,13) ist gleichzeitig ansteuerbar und somit die zugeordnete Anzahl der Hülsen (14,15,16,17,18) gleichzeitig bewegbar zum parallelen Verschließen und/oder Öffnen einer beliebigen Anzahl von Passagen (3-4,3-5,3-6,3-7,3-8).

10. Regelbares Dämpfungsventilsystem nach Anspruch 1 oder 8,
dadurch gekennzeichnet,
daß der Drehschieber (15) in Verlängerung mindestens eines Durchmessers zwei Permanentmagnete (34,35) aufweist, deren Pole (N-S) tangential ausgerichtet sind, wobei die Spulenkerne (36,36') der Erregerspulen (42,42') der Elektromagnete (20) länglich gekrümmt teilweise um den Drehschieber (15) und die Kolbenstange (1) herumgebogen innerhalb der betreffenden Durchlaß-Querschnittsebene angeordnet sind.

11. Regelbares Dämpfungsventilsystem nach Anspruch 1 oder 9 oder 10,
dadurch gekennzeichnet,
daß die einzelne Hülse des Steuerschiebers als Kern eines Elektromagneten ausgebildet und mit einer Drahtwicklung ausgestattet ist, wobei der zugehörige Stator aus ferromagnetischem Material besteht oder ein Permanentmagnet ist.

12. Regelbares Dämpfungsventilsystem nach Anspruch 1 oder 2 oder 3,
dadurch gekennzeichnet,
daß die Steuerschiebersysteme (9-13,56-59,70) sowohl für die Druckstufe als auch für die Zugstufe je eine stabile statische Arbeitsstellung aufweisen

13. Regelbares Dämpfungsventilsystem nach Anspruch 12,
dadurch gekennzeichnet,
daß die Steuerschiebersysteme (9-13;56-59;70) für die Druckstufe als auch für die Zugstufe mindestens zwei stabile statische Arbeitsstellungen aufweisen.

14. Regelbares Dämpfungsventilsystem nach Anspruch 12,
dadurch gekennzeichnet,
daß innerhalb des Dämpfungsventilsystems Steuerschiebersysteme mit unterschiedlicher Anzahl von statischen Arbeitsstellungen gemischt vorhanden sind.

15. Regelbares Dämpfungsventilsystem nach Anspruch 1 oder 2 oder 3,
dadurch gekennzeichnet,
daß zwischen dem inneren Zylinder (51) zum Auffangraum (53) des äußeren Zylinders (52) ein Durchbruch angeordnet ist, innerhalb desselben ein Steuerschiebersystem (70) zum Verschließen oder Öffnen des Durchganges (73,74) des Steuerschiebersystems angeordnet ist, wobei der Schieber ein Drehschieber (72) ist.

## Claims

1. Regulatable damping valve system with variable damping characteristic for a vibration damper, especially for vehicles, comprising at least one cylinder (51) filled with a damping fluid as well as a piston rod (1,54), which tightly enters the cylinder and which carries, on its end facing the cylinder, a piston (2,55) which is sealed against the cylinder wall, thus dividing the cylinder space into two chambers (53,77,78), whereby the piston parts which are relatively movable with respect to the cylinder are provided with an opening located between the chambers, whose cross section can be opened or closed by an electrically regulated control slide valve system, characterized in that, in addition to the existing opening with the electrically regulatable cross section, between the chambers (53,77, 78), there is at least another opening (4,5,6,7,8;60,61, 62,63,73,74) located in parallel, which can be opened or closed independent of the first slide valve system by another electrically regulated control slide valve system (9,10,11,12,13;56,57,58,59,70), whereby all of the control slide valve systems are capable of being switched parallel as well as independent of each other.

2. Regulatable damping valve system according to Claim 1, characterized in that each passage (4,5,6,7,8;60,61,62,63) consists of crosswise openings (4,5,6,7,8;60,61,62,63) passing through the piston rod, which are located in cross-sectional planes above one another and which, above the piston, open into a longitudinal borehole (3,86) which passes through the piston rod starting on its front, whereby each crosswise opening (4,5,6,7,8;60,61,62,63) can be opened or closed by means of an electrically regulated control slide valve system (9,10,11,12,13;56,57,58,59) and all of the control slide valve systems are capable of being switched parallel as well as independent of each other.

3. Regulatable damping valve system according to Claim 2, characterized in that the effective cross sections of the passages (60,61,62, 63) are different in size.

4. Regulatable damping valve system according to Claim 1 or 2, characterized in that the control slide valve system (9,10,11,12,13;56,57,58, 59,70) consists of a slide valve (14,15,16,17,18;72) and electromagnets (19,20,21,22,23;83-84) to move the slide valves (14,15,16,17,18;72).

5. Regulatable damping valve system according to Claim 1 or 4, characterized in that the slide valves (14,15,16,17,18;72) of the control slide valve systems (9,10,11,12,13;56,57,58,59,70) can essentially be actuated simultaneously.

6. Regulatable damping valve system according to Claim 1 or 2, characterized in that the individual slide valves are designed as rotary slide valves or as alternating slide valves, each having the positions "Open" and "Closed".

7. Regulatable damping valve system according to Claim 6, characterized in that at least one of the slide valves is designed as a permanent magnet or permanent magnets, whereby the appertaining slide valve is capable of assuming a bi-stable or tri-stable position with respect to the magnet or magnets.

8. Regulatable damping valve system according to Claim 1 or 3, characterized in that at least one of the control slide valve systems has at least one intermediate position between the closed and the fully open position, thus allowing a reduced flow cross section.

9. Regulatable damping valve system according to Claim 1 or 2 or 6, characterized by the following features:
   a) the opening inside the piston rod (1) is divided up into several fluid-wise parallel passages (3-4,3-5,3-6, 3-7,3-8), whereby each passage consists of crosswise openings (4,5,6,7,8) which open into the longitudinal borehole (3) and which, for each passage, lie above one another in different cross-sectional planes of the piston rod;
   b) each control slide valve system (9,10,11,12,13) consists of several sleeves separated from each other (14,15,16,17,18) which are positioned movably, one for each passage, above one another but independent of each other on the piston rod (1) in the area of the crosswise openings (4,5,6,7,8) and for each sleeve, there is at least one electromagnet (19,20,21,22,23), whereby one sleeve is assigned to each crosswise opening of a cross-sectional plane or passage;
   c) each sleeve has a closed and at least one open position with respect to their corresponding crosswise openings (4,5,6,7,8) to close and open the passage (3-4,3-5,3-6,3-7,3-8);
   d) any number of control slide valve systems (9,10,11,12, 13) can be actuated simultaneously and thus the corresponding number of sleeves (14,15,16,17,18) can be moved simultaneously to open and/or close any number of passages (3-4,3-5,3-6,3-7,3-8) in parallel.

10. Regulatable damping valve system according to Claim 1 or 8,
characterized in that
the rotary slide valve (15), extended by the size of at least one diameter, has two permanent magnets (34,35), whose poles (N-S) are tangentially oriented, whereby the cores (36,36') of the excitation coils (42,42') of the electromagnets (20) are partially bent lengthwise around the rotary slide valve (15) and around the piston rod (1) inside the appertaining passage cross-sectional plane.

11. Regulatable damping valve system according to Claim 1 or 9 or 10,
characterized in that
each individual sleeve of the control slide valve is designed as the core of an electromagnet and is equipped with a wire winding, whereby the appertaining stator consists of ferromagnetic material or else it is a permanent magnet.

12. Regulatable damping valve system according to Claim 1 or 2 or 3,
characterized in that
the control slide valve systems (9-13,56-59,70) have at least two stable static operating positions for the pressure stage as well as for the tension stage.

13. Regulatable damping valve system according to Claim 12,
characterized in that
the control slide valve systems (9-13,56-59,70) have at least two stable static operating positions for the pressure stage as well as for the tension stage.

14. Regulatable damping valve system according to Claim 12,
characterized in that
there are control slide valve systems inside of the regulatable damping valve system with a different number of static operation positions.

15. Regulatable damping valve system according to Claim 1 or 2 or 3,
characterized in that,
in the collecting space (53) between the inner cylinder (51) and the outer cylinder (52), there is a passage within which a control slide valve system (70) is arranged to open or close the opening (73,74) of the control slide valve system, whereby the slide valve is a rotary slide valve (72).

## Revendications

1. Système de soupape d'amortissement réglable avec caractéristique d'amortissement variable pour un amortisseur de vibrations, destiné en particulier à des véhicules automobiles, comportant au moins un cylindre (51) rempli d'un fluide amortisseur et une tige de piston (1,54) qui s'immerge dans le cylindre de façon étanchée et qui porte à son extrémité côté cylindre un piston (2,55) rendu étanche du côté de la paroi du cylindre, lequel divise l'intérieur du cylindre en deux chambres (53,77,78) , les parties du piston mobiles par rapport au cylindre présentant un passage disposé entre les chambres et dont la section peut être ouverte ou fermée à l'aide d'un système de vanne de réglage à commande électrique, caractérisé en ce que, outre le passage existant avec section réglable électriquement entre les chambres (53, 77,78), il est prévu au moins un autre passage (4,5,6,7, 8;60,61,62,63,73,74) disposé parallèlement qui, indépendamment du premier système de vanne de réglage, peut être ouvert ou fermé par un autre système de vanne de réglage à commande électrique (9,10,11,12,13;56,57,58,59,70), tous ces systèmes de vannes de réglage pouvant être actionnés en parallèle, indépendamment les uns des autres.

2. Système de soupape d'amortissement réglable suivant la revendication 1, caractérisé en ce que chaque passage (4,5,6,7,8;60,61,62,63) est constitué par des passages transversaux (4,5,6,7,8,60,61,62,63) traversant la tige de piston et situés dans des plans de section disposés l'un au-dessus de l'autre et qui débouchent tous dans une forure longitudinale (3,86) de la tige de piston partant de son extrémité frontale, et ceci au-dessus du piston, chacun de ces passages transversaux (4,5,6,7,8;60,61, 62,63) pouvant être ouvert ou fermé au moyen de son propre système de vanne de réglage à commande électrique (9,10,11,12,13;56,57,58,59) et tous les systèmes de vannes de réglage pouvant être actionnés en parallèle, indépendamment les uns des autres.

3. Système de soupape d'amortissement réglable suivant la revendication 2, caractérisé en ce que les sections efficaces des passages (60,61,62,63) présentent des dimensions différentes.

4. Système de soupape d'amortissement réglable suivant l'une quelconque des revendications 1 et 2,
   caractérisé en ce que
   le système de vanne de réglage (9,10,11,12,13;56,57,58, 59,70) consiste en une vanne (14,15,16,17,18;72) et en un électro-aimant (19,20,21,22,23;83-84) qui assure le mouvement des vannes (14,15,16,17,18;72).

5. Système de soupape d'amortissement réglable suivant l'une quelconque des revendications 1 et 4,
   caractérisé en ce que
   les vannes (14,15,16,17,18;72) des systèmes de vannes de réglage (9,10,11,12,13;56,57,58,59,70) peuvent être actionnées sensiblement simultanément.

6. Système de soupape d'amortissement réglable suivant l'une quelconque des revendications 1 et 2,
   caractérisé en ce que
   les vannes individuelles se présentent sous forme de vannes rotatives ou de vannes à mouvement alternatif, chacune avec les positions "Ouvert" et "Fermé".

7. Système de soupape d'amortissement réglable suivant la revendication 6, caractérisé en ce qu'au moins l'une des vannes est concue en tant qu'aimant permanent ou en tant qu'aimants permanents, ladite vanne étant en mesure de prendre une position bistable ou tristable par rapport à l'aimant ou aux aimants.

8. Système de soupape d'amortissement réglable suivant l'une quelconque des revendications 1 et 3, caractérisé en ce qu'au moins l'un des systèmes de vannes de réglage présente au moins une position intermédiaire avec section de passage réduite entre la position de fermeture et la position de pleine ouverture.

9. Système de soupape d'amortissement réglable suivant l'une quelconque des revendications 1, 2 et 6, caractérisé par les propriétés suivantes:
   a) le passage à l'intérieur de la tige de piston (1) est subdivisé en plusieurs passages à sens de fluide parallèles (3-4,3-5,3-6,3-7,3-8), chaque passage étant constitué par des passages transversaux (4,5,6,7,8) débouchant dans la forure longitudinale (3), lesdits passages étant disposés dans des plans de section superposés de la tige de piston;
   b) chacun des systèmes de vannes de réglage (9,10,11,12, 13) est composé de plusieurs douilles séparées (14,15,16, 17,18) disposées de façon mobile l'une au-dessus de l'autre, mais indépendamment les unes des autres, sur la tige de piston (1) dans la zone des passages transversaux (4,5,6,7,8) de chaque passage (3-4,3-5,3-6,3-7,3-8), chacune de ces douilles étant dotée d'au moins un électro-aimant (19,20,21,22,23) et étant assignée aux passages transversaux d'un plan de section ou d'un passage;
   c) chaque douille possède une position de fermeture et au moins une position de passage par rapport aux passages transversaux respectifs (4,5,6,7,8) pour la fermeture et l'ouverture du passage (3-4,3-5,3-6,3-7,3-8);
   d) un nombre quelconque de systèmes de vannes de réglage (9,10,11,12,13) peut être actionné simultanément et, de ce fait, le nombre correspondant de douilles (14,15,16, 17,18) peut être mis en mouvement simultanément pour fermer et/ou ouvrir parallèlement un nombre quelconque de passages (3-4,3-5,3-6,3-7,3-8).

10. Système de soupape d'amortissement réglable suivant l'une quelconque des revendications 1 et 8,
    caractérisé en ce que
    la vanne rotative (15), dans son allongement correspondant à au moins un diamètre, présente deux aimants permanents (34,35) dont les pôles (N-S) sont orientés de façon tangentielle, les noyaux (36,36') des bobines excitatrices (42,42') des électro-aimants (20) étant disposés, courbés en sens longitudinal et partiellement pliés autour de la vanne rotative (15) et de la tige de piston (1), à l'intérieur du plan de la section de passage correspondant.

11. Système de soupape d'amortissement réglable suivant l'une quelconque des revendications 1, 9 et 10,
    caractérisé en ce que
    la douille individuelle de la vanne de distribution se présente sous forme de noyau d'un électro-aimant et est dotée d'un enroulement en fils, le stator afférent consistant en un matériau ferromagnétique ou étant un aimant permanent.

12. Système de soupape d'amortissement réglable selon l'une quelconque des revendications 1, 2 et 3,
    caractérisé en ce que
    chaque système de vanne de réglage (9-13,56-59,70) présente une position de travail stable et statique tant pour l'étage de pression que pour l'étage de traction.

13. Système de soupape d'amortissement réglable suivant la revendication 12, caractérisé en ce que les systèmes de vannes de réglage (9-13;56-59;70) présentent au moins deux positions de travail stables et statiques tant pour l'étage de pression que pour l'étage de traction.

14. Système de soupape d'amortissement réglable suivant la revendication 12, caractérisé en ce que le système de soupape d'amortissement comprend à l'intérieur des systèmes de vannes de réglage mixtes avec un nombre différent de positions de travail statiques.

15. Système de soupape d'amortissement réglable suivant l'une quelconque des revendications 1, 2 et 3, caractérisé en ce qu' un passage est disposé entre le cylindre intérieur (51) vers l'espace collecteur (53) du cylindre extérieur (52), à l'intérieur duquel est disposé un système de vanne de réglage (70) destinée à la fermeture ou l'ouverture du passage (73,74) du système de vanne de réglage, ladite vanne étant une vanne rotative (72).

Fig. 1

Fig. 2

Fig. 3

Fig. 4

A - A

Fig.5

Fig. 6

Fig. 7

B - B

Fig. 8

Fig. 9